# EUROPÄISCHE PATENTSCHRIFT

(11) **EP 4 547 584 B1**
(45) Veröffentlichungstag und Bekanntmachung des Hinweises auf die Patenterteilung: **25.02.2026**
(21) Anmeldenummer: 22737889.0
(22) Anmeldetag: 29.06.2022
(51) Int. Cl.: B65G 54/02, B65G 47/52, B65G 47/252

(54) **BELADEVORRICHTUNG UND MAGNETSCHWEBEFÖRDERVORRICHTUNG MIT WENIGSTENS EINER DERARTIGEN BELADEVORRICHTUNG**
LOADING DEVICE AND MAGNETIC LEVITATION CONVEYING DEVICE HAVING AT LEAST ONE SUCH LOADING DEVICE
DISPOSITIF DE CHARGEMENT ET DISPOSITIF DE TRANSPORT PAR LÉVITATION MAGNÉTIQUE COMPRENANT AU MOINS UN DISPOSITIF DE CHARGEMENT DE CE TYPE

(43) Veröffentlichungstag der Anmeldung: 07.05.2025
(73) Patentinhaber: SOMIC Verpackungsmaschinen GmbH & Co. KG, 83123 Amerang (DE)
(72) Erfinder: WANDER, Matthias, 82024 Taufkirchen (DE)
(74) Vertreter: Weickmann & Weickmann PartmbB
(86) Internationale Anmeldenummer: PCT/EP2022/067894
(87) Internationale Veröffentlichungsnummer: WO 2024/002473

(56) Entgegenhaltungen:
- WO-A1-2015/162182
- WO-A1-2020/243814
- DE-A1- 102015 209 613

## Beschreibung

Die Erfindung betrifft eine Beladevorrichtung zum Beladen einer auf einem Mover angebrachten Aufnahme mit wenigstens einem Produkt, wobei der Mover Teil einer in Magnetschwebetechnologie ausgebildeten Fördervorrichtung ist, wobei die Beladevorrichtung den Mover mit der darauf angebrachten Aufnahme umfasst, wenigstens eine Zuführeinrichtung zum Zuführen des wenigstens einen Produkts, wenigstens eine erste Statoreinheit mit einer ersten Bewegungsfläche, längs der sich der Mover bewegen kann, und wenigstens eine zweite Statoreinheit mit einer zweiten Bewegungsfläche, längs der sich der Mover bewegen kann, wobei die wenigstens eine erste Statoreinheit und die wenigstens eine zweite Statoreinheit in einer Anfangsstellung relativ zueinander so angeordnet ist, dass die erste Bewegungsfläche und die zweite Bewegungsfläche im Wesentlichen eine gemeinsame Ebene bilden. Aus der US 2020/0030995 A1 ist ganz allgemein eine in Magnetschwebetechnologie ausgebildete Fördervorrichtung bekannt. Die WO 2020/243814 A1 offenbart die Merkmale des Oberbegriffs des Anspruchs 1.

Um einzelne Produkte zu sammeln, beispielsweise um diese in Gruppen einer Verpackungsvorrichtung zuführen zu können, sind umlaufende Fächersammler bekannt. Diese Fächersammler weisen nach radial außen geöffnete Aufnahmen auf. Über eine Zuführeinrichtung werden die Produkte, welche von dem Fächersammler aufgenommen werden sollen, letzterem auf der Zuführeinrichtung liegend zugeführt. Zum Zwecke der Verpackung der Produkte ist es jedoch häufig erforderlich, die Produkte stehend anzuordnen. Dies wird bei dem bekannten Fächersammler durch dessen Umlauf erreicht, in dessen Folge die Orientierung der Produkte um im Wesentlichen 90° gedreht wird.

Die US 2020/0030995 A1 bietet keine Lösung an, um Produkte in einer in Magnetschwebetechnologie ausgebildeten Fördervorrichtung ausgehend von einer liegenden Zuführung in eine aufrechte Position überzuführen.

Aufgabe der vorliegenden Erfindung ist es, eine derartige Lösung bereitzustellen.

Diese Aufgabe wird erfindungsgemäß durch eine Beladevorrichtung der eingangs genannten Art gelöst, bei welcher die wenigstens eine zweite Statoreinheit relativ zu der wenigstens einen ersten Statoreinheit zwischen der Anfangsstellung und einer Endstellung neigbar ist, wobei die wenigstens eine Zuführeinrichtung derart angeordnet ist, dass das wenigstens eine Produkt schwerkraftbedingt von der jeweiligen Zuführeinrichtung in die Aufnahme des Movers überführbar ist, wenn sich dieser in einer geneigten, der jeweiligen Zuführeinrichtung zugeordneten Beladeposition befindet, deren Neigungswinkel im Wesentlichen gleich dem Neigungswinkel der in der Endstellung angeordneten wenigstens einen zweiten Statoreinheit ist.

Bereits an dieser Stelle sei darauf hingewiesen, dass die im Wesentlichen gemeinsame Ebene der ersten und zweiten Bewegungsflächen auch geringe Höhenunterschiede und/oder Spalte zwischen diesen aufweisen kann, solange diese Höhenunterschiede und/oder Spalte keinen Einfluss auf die Bewegung des Movers zwischen den ersten und zweiten Bewegungsflächen haben, d.h. eine sich im Toleranzbereich der Magnetschwebetechnologie befindende Größe aufweisen. Üblicherweise verläuft diese im Wesentlichen gemeinsame Ebene der ersten und zweiten Bewegungsflächen im Wesentlichen horizontal.

Ferner sei darauf hingewiesen, dass zwei Neigungswinkel dann als im Wesentlichen gleich angesehen werden, wenn sie sich höchstens um einen Winkel unterscheiden, um den die Mover bei der bekannten Magnetschwebetechnologie durch Veränderung der Magnetkräfte ohnehin relativ zur Bewegungsfläche der Statoreinheiten geneigt werden können.

Erfindungsgemäß wird durch die Neigung des Movers in der Beladeposition auch die auf dem Mover angebrachte Aufnahme geneigt. Hierdurch wird der Winkel, um den das liegend zugeführte Produkt bei der Überführung in die Aufnahme gedreht werden muss, um den Neigungswinkel der wenigstens einen zweiten Statoreinheit reduziert. Dies verringert die Geschwindigkeit, mit der das Produkt in die Aufnahme überführt wird. Zudem ist seine schwerkraftbedingte Bewegung in die Aufnahme hinein kein reiner freier Fall. Vielmehr gleitet das Produkt eher in die Aufnahme hinein als dass es in sie hineinfällt. All dies reduziert den Aufprall des Produkts auf dem Boden der Aufnahme und verringert somit insbesondere auch die Gefahr einer Beschädigung des Produkts.

Um einen Schlupf der Produkte auf der Zuführeinrichtung zumindest reduzieren, wenn nicht gar ausschließen zu können, und so die Produkte möglichst präzise in die Aufnahme einführen zu können, kann die Zuführeinrichtung mit Positionierungsmitteln versehen sein. Beispielsweise können die Produkte mittels Unterdruck bis zum Ende der Zuführeinrichtung auf einem Zuführband der Zuführeinrichtung gehalten werden. Der Unterdruck kann die Produkte beispielsweise durch Perforationen des Zuführbands an dessen Oberfläche ansaugen.

Erfindungsgemäß können sowohl Aufnahmen verwendet werden, die lediglich ein einziges Fach aufweisen, in dem insbesondere eine Mehrzahl von Produkten aufgenommen werden kann, als auch Aufnahmen, die eine Mehrzahl von Fächern aufweisen, in denen jeweils wenigstens ein Produkt aufgenommen werden kann.

Bei Verwendung einer Aufnahme mit einer Mehrzahl von Fächern, kann der wenigstens eine Mover in der Schräglage bewegt werden, während die Aufnahme mit Produkten befüllt wird. Dies hat den Vorteil, dass jedes Produkt in das ihm zugedachte Fach überführt werden kann.

Auch wenn die Beladevorrichtung eine Mehrzahl von Zuführeinrichtungen umfasst, ist es vorteilhaft, den Mover während des Beladens bewegen zu können, um die zugeführten Produkte in einer gewünschten Reihenfolge in der Aufnahme anordnen zu können.

Durch die Verwendung unterschiedlicher Movertypen, beispielsweise Mover mit unterschiedlichen Abmessungen, oder/und die Verwendung unterschiedlicher Aufnahmen, beispielsweise Aufnahmen unterschiedlicher Abmessungen oder/und unterschiedlicher Anzahl von Fächern, kann die erfindungsgemäße Beladevorrichtung ohne Weiteres problemlos an eine Vielzahl von Produkttypen und/oder Aufgabenstellungen angepasst werden.

Um bei der erfindungsgemäßen Beladevorrichtung die Gefahr einer Beschädigung der Produkte weiter reduzieren zu können, wird vorgeschlagen, dass ein an die zugeordnete Beladeposition des Movers angrenzender Abschnitt der wenigstens einen Zuführeinrichtung relativ zu der ersten Bewegungsfläche der wenigstens einen ersten Statoreinheit geneigt verläuft. Als besonders vorteilhaft hat es sich dabei erwiesen, wenn der Winkel zwischen der wenigstens einen, geneigt verlaufenden Zuführeinrichtung und der zweiten Bewegungsfläche der sich in der Endstellung befindlichen wenigstens einen zweiten Statoreinheit zwischen etwa 160° und etwa 30°, vorzugsweise zwischen etwa 120° und etwa 45°, noch bevorzugter etwa 90°, beträgt.

Bei einer Beladevorrichtung mit wenigstens einer ersten Statoreinheit und wenigstens einer zweiten Statoreinheit kann die wenigstens eine Beladeposition auf der wenigstens einen zweiten Statoreinheit angeordnet sein. In diesem Fall kann ein Beladezyklus wie folgt ablaufen:

Befindet sich die wenigstens eine zweite Statoreinheit in der Anfangsstellung, so kann sich ein Mover mit einer leeren Aufnahme von der wenigstens einen ersten Statoreinheit auf die wenigstens eine zweite Statoreinheit bewegen, und zwar in eine Beladeposition. Nun wird die wenigstens eine zweite Statoreinheit in die Endstellung abgesenkt, so dass die Aufnahme durch Betätigen der der Beladeposition zugeordneten Zuführeinrichtung mit dem wenigstens einen Produkt befüllt werden kann. Dabei kann sich der Mover an der Beladeposition in eine Mehrzahl von Beladeunterpositionen bewegen, welche zusammen die Beladeposition bilden, um die Aufnahme einer Mehrzahl von Produkten zu ermöglichen. Anschließend wird die wenigstens eine zweite Statoreinheit wieder in die Anfangsstellung geschwenkt, in der der nun befüllte Mover wieder in den Bereich der wenigstens einen ersten Statoreinheit wechseln kann.

Um zumindest einen Teil der Totzeit, während der der Beladevorgang unterbrochen werden muss, vermeiden zu können, wird in Weiterbildung der Erfindung vorgeschlagen, dass die wenigstens eine zweite Statoreinheit ausreichend Platz für die gleichzeitige Anordnung von wenigstens zwei Movern aufweist. In diesem Fall kann nämlich der Wechsel von beladenen und unbeladenen Movern in der Anfangsstellung schneller erfolgen. Während sich der beladene Mover aus der Beladeposition der wenigstens einen zweiten Statoreinheit zu der wenigstens einen ersten Statoreinheit bewegt, kann sich nämlich gleichzeitig ein unbeladener Mover von der wenigstens einen ersten Statoreinheit in die weitere Position der wenigstens einen zweiten Statoreinheit bewegen. Und während des Absenkens der wenigstens einen zweiten Statoreinheit kann der unbeladene Mover von der weiteren Position in die Beladeposition wechseln.

In Weiterbildung der Erfindung kann ferner vorgesehen sein, dass die Beladevorrichtung ferner wenigstens eine dritte Statoreinheit mit einer dritten Bewegungsfläche, längs der sich der Mover bewegen kann, umfasst, wobei die wenigstens eine dritte Statoreinheit im Wesentlichen die gleiche Neigung aufweist wie die wenigstens eine zweite Statoreinheit in der Endstellung, und wobei die zweite Bewegungsfläche und die dritte Bewegungsfläche, dann, wenn sich die wenigstens eine zweite Statoreinheit in der Endstellung befindet, im Wesentlichen eine gemeinsame Ebene bilden. Die wenigstens eine dritte Statoreinheit ermöglicht eine weitere Verkürzung der Totzeit. Die Beladeposition kann in diesem Fall nämlich auf der wenigstens einen dritten Statoreinheit angeordnet sein, während auf der wenigstens einen zweiten Statoreinheit lediglich wenigstens eine Transferposition vorgesehen ist. Daher kann der Beladevorgang an einem sich auf der wenigstens einen dritten Statoreinheit in der Beladeposition befindenden Mover durchgeführt werden, während der zuletzt beladene Mover von der wenigstens einen zweiten Statoreinheit zur wenigstens einen ersten Statoreinheit angehoben und anschließend ein weiterer unbeladener Mover von der wenigstens einen ersten Statoreinheit zur wenigstens einen zweiten Statoreinheit geschwenkt wird. Verfügen die wenigstens eine zweite Statoreinheit und die wenigstens eine dritte Statoreinheit jeweils über wenigstens eine weitere Position zur Anordnung eines Movers, so kann die Totzeit besonders effektiv reduziert, wenn nicht gar vollständig vermieden werden.

Um im Falle eines Stromausfalls ein Abrutschen des Movers oder der Mover verhindern zu können, wird vorgeschlagen, dass der wenigstens einen Beladeposition und gegebenenfalls der wenigstens einen weiteren Position eine Anschlageinheit zugeordnet ist. Eine derartige Anschlageinheit kann beispielsweise an der wenigstens einen zweiten bzw. dritten Statoreinheit angebracht sein.

Zur Erhöhung der Flexibilität des Einsatzes der erfindungsgemäßen Beladevorrichtung wird vorgeschlagen, dass die wenigstens eine dritte Statoreinheit in eine Stellung überführbar ist, in der die dritte Bewegungsfläche zusammen mit der zweiten Bewegungsfläche der sich in der Anfangsposition befindenden wenigstens einen zweiten Statoreinheit und der ersten Bewegungsfläche der wenigstens einen ersten Statoreinheit im Wesentlichen eine gemeinsame Ebene bildet. In diesem Zustand können die von der wenigstens einen Zuführeinrichtung liegend zugeführten Produkte nämlich auch liegend in der Aufnahme des Movers angeordnet werden.

Die Neigung der wenigstens einen zweiten Statoreinheit zwischen der Anfangsstellung und der Endstellung kann auf unterschiedliche Art und Weise bewerkstelligt werden.

Gemäß einer ersten Alternative kann die wenigstens eine zweite Statoreinheit an der wenigstens einen ersten Statoreinheit um eine Schwenkachse schwenkbar angelenkt sein, während die wenigstens eine zweite Statoreinheit gemäß einer zweiten Alternative mit einem Schwenkmechanismus verbunden sein kann, dessen Schwenkachse außerhalb der wenigstens einen zweiten Statoreinheit angeordnet ist. Bei der zweiten Alternative kann die wenigstens eine zweite Statoreinheit mit dem Schwenkmechanismus entweder starr oder über einen Gelenkmechanismus verbunden sein.

Diese beiden Alternativen haben den Vorteil, dass zur Herbeiführung der Neigungsbewegung der wenigstens einen zweiten Statoreinheit lediglich ein Stellantrieb ausreicht. Im Falle der ersten Alternative kann dieser Stellantrieb an einer von der Schwenkachse entfernten Stelle der wenigstens einen zweiten Statoreinheit angreifen, und beispielsweise ein Linearantrieb sein. Im Falle der zweiten Alternative treibt der Stellantrieb den Schwenkmechanismus an.

Gemäß einer dritten Alternative können wenigstens zwei Stellantriebe, beispielsweise zwei Linearantriebe, vorgesehen sein, die an voneinander beabstandeten Stellen der wenigstens einen zweiten Statoreinheit angreifen.

Ferner können wenigstens zwei Stellantriebe, beispielsweise zwei Linearantriebe, vorgesehen sein, die an voneinander beabstandeten Stellen der wenigstens einen dritten Statoreinheit angreifen.

Gemäß einem weiteren Gesichtspunkt betrifft die Erfindung eine Magnetschwebefördervorrichtung mit wenigstens einer erfindungsgemäßen Beladevorrichtung. Bezüglich der mit einer derartigen Magnetschwebefördervorrichtung erzielbaren Vorteile sei auf die voranstehende Diskussion der erfindungsgemäßen Beladevorrichtung verwiesen.

Die Erfindung wird im Folgenden anhand von Ausführungsbeispielen mit Bezug auf die begleitenden Zeichnungen näher erläutert werden.

Es stellt dar:
- Figur 1: eine schematische Darstellung einer erfindungsgemäßen Magnetschwebefördervorrichtung mit einer erfindungsgemäßen Beladevorrichtung;
- Figur 2: eine schematische Darstellung einer ersten Weiterbildung der Magnetschwebefördervorrichtung und der Beladevorrichtung aus Figur 1;
- Figur 3: eine schematische Darstellung einer zweiten Weiterbildung der Magnetschwebefördervorrichtung und der Beladevorrichtung aus Figur 1;
- Figuren 4 bis 7: schematische Darstellungen zur Erläuterung von Möglichkeiten zur Herbeiführung der Neigebewegung der wenigstens einen zweiten Statoreinheit.

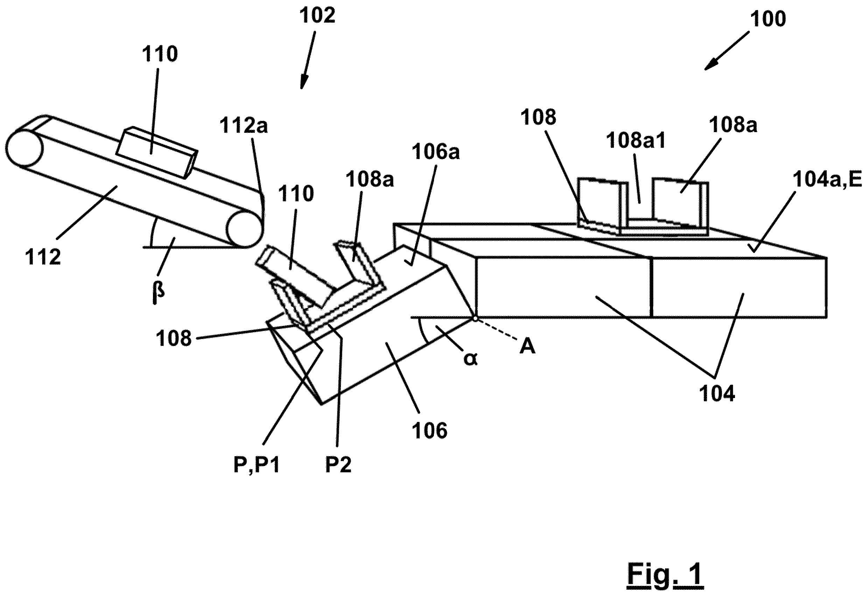

In Figur 1 ist eine Magnetschwebefördervorrichtung ganz allgemein mit 100 bezeichnet. Die Magnetschwebefördervorrichtung 100 umfasst eine Beladevorrichtung 102, welche ihrerseits eine Mehrzahl von ersten Statoreinheiten 104, eine zweite Statoreinheit 106 und eine Mehrzahl von Movern 108 umfasst.

Wie dies aus der US 2020/0030995 A1 an sich bekannt ist, ist in den Statoreinheiten 104 und 106 eine Mehrzahl von (hier nicht dargestellten) Magnetspulen angeordnet, die ein sich längs der Statoreinheiten 104, 106 bewegendes Magnetfeld erzeugen. Dieses Magnetfeld wechselwirkt mit in den Movern 108 angeordneten (ebenfalls nicht dargestellten) Permanentmagneten zusammen. Hierdurch werden die Mover 108 von dem sich bewegenden Magnetfeld mitgezogen und bewegen sich längs der Oberflächen 104a, 106a der Statoreinheiten 104, 106. Die Oberflächen 104a, 106a werden im Zusammenhang mit der vorliegenden Erfindung auch als "Bewegungsflächen" bezeichnet.

Auf den Movern 108 ist jeweils eine Aufnahme 108a angebracht, in der eine Mehrzahl von Produkten 110 aufgenommen werden können. In der Ausführungsform der Figur 1 verfügt jede Aufnahme nur über ein Fach 108a1, und in jeder Aufnahme 108a können zwei Produkte 110 aufgenommen werden. Es versteht sich aber von selbst, dass die Erfindung hierauf nicht beschränkt ist. Es sind auch Aufnahmen 108 mit einer Mehrzahl von Fächern denkbar. Ferner kann in jedem Fach eine beliebige Anzahl von Produkten 110 aufgenommen werden.

Erfindungsgemäß ist die zweite Statoreinheit 106 zwischen einer Anfangsstellung, in der ihre Bewegungsfläche 106a im Wesentlichen bündig an die Bewegungsfläche 104a der ersten Statoreinheiten 104 anschließt und mit dieser eine gemeinsame Ebene E bildet, und einer Endstellung (siehe Figur 1) neigbar. Die Anfangsstellung und die Endstellung der zweiten Statoreinheit 106 schließen miteinander einen Neigungswinkel α ein.

Wie in Figur 1 dargestellt ist, können sich die Mover 108 auf der Bewegungsfläche 106a der zweiten Statoreinheit 106 in eine Beladeposition P bewegen, in der die auf einer Zuführeinrichtung 112 liegend zugeführten Produkte 110 schwerkraftbedingt vom Ende 112a der Zuführeinrichtung 112 in die Aufnahme 108a übergeführt werden, wo sie eine im Wesentlichen stehende Position einnehmen. Genauer gesagt umfasst die Beladeposition P für jedes Produkt 110, das in der Aufnahme 108a aufgenommen werden soll, eine eigene Beladeunterposition. Im dargestellten Ausführungsbeispiel sind somit zwei Beladeunterpositionen P1 und P2 vorgesehen.

Wurde der sich gerade in der Beladeposition befindende Mover 108 vollständig befüllt, wird die zweite Statoreinheit 106 aus ihrer Endstellung in die Anfangsstellung verstellt, so dass die Bewegungsflächen 104a, 106a der ersten und zweiten Statoreinheiten 104, 106 eine gemeinsame Ebene E bilden. In diesem Zustand kann sich der beladene Mover 108 von der zweiten Statoreinheit 106 auf die ersten Statoreinheiten 104 bewegen und somit Platz machen für einen unbeladenen Mover 108, der sich von den ersten Statoreinheiten 104 auf die zweite Statoreinheit 106 bewegt. Anschließend kann die zweite Statoreinheit 106 aus ihrer Anfangsstellung in die Endstellung verstellt werden, um das Beladen des unbeladenen Movers 108 zu ermöglichen.

Nachzutragen ist, dass auch ein an die Beladeposition P angrenzender Abschnitt der Zuführeinrichtung 112 in dem dargestellten Ausführungsbeispiel geneigt angeordnet ist, und zwar um einen Neigungswinkel β. Auf diese Weise müssen die liegend zugeführten Produkte 110 nur um einen Winkel von (90° - α - β) gedreht werden, um sie in eine relativ zur Aufnahme 108a aufrechte bzw. stehende Stellung überzuführen.

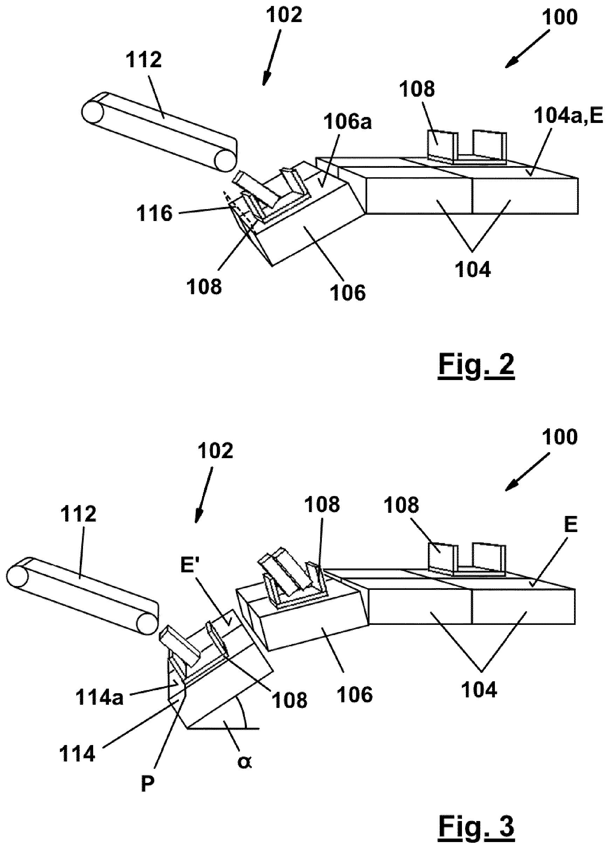

In der Weiterbildung der Figur 2 umfasst die Beladevorrichtung 102 eine Mehrzahl von zweiten Statoreinheiten 106, die gemeinsam zwischen der Anfangsstellung und der Endstellung verstellt werden können. Obgleich in Figur 2 der Übersichtlichkeit halber nur zwei zweite Statoreinheiten 106 dargestellt sind, könnten auch drei oder mehr zweite Statoreinheiten 106 vorgesehen sein. Durch die wenigstens eine zusätzliche zweite Statoreinheit ist sichergestellt, dass auf den zweiten Statoreinheiten 106 auf jeden Fall ausreichend Platz für zwei Mover 108 vorhanden ist.

Dies ermöglicht es beispielsweise, dass dann, wenn sich der gerade von der Zuführeinrichtung 112 beladene Mover 108 in der Anfangsstellung der zweiten Statoreinheiten 106 von der einen zweiten Statoreinheiten 106 auf die ersten Statoreinheiten 104 bewegt, gleichzeitig ein unbeladener Mover 108 von den ersten Statoreinheiten 104 auf die andere zweite Statoreinheit 106 bewegen kann. Dieser gleichzeitige Platzwechsel der beiden Mover verkürzt die Dauer des Beladezyklus. Während die zweite Statoreinheit 106 aus ihrer Anfangsstellung in die Endstellung verstellt wird, kann der unbeladene Mover 108 in die Beladestellung wechseln.

Eine weitere Verkürzung der Dauer des Beladezyklus kann durch die Weiterbildung der Figur 3 erzielt werden, gemäß der die Beladevorrichtung 102 ferner dritte Statoreinheiten 114 umfasst, auf deren dritter Bewegungsfläche 114a sich der Mover 108 unter Verwendung von Magnetschwebetechnologie bewegen kann. Die dritten Statoreinheiten 114 sind relativ zu den ersten Statoreinheiten 104 geneigt angeordnet, und zwar um den gleichen Neigungswinkel α, den auch die zweiten Statoreinheiten 106 in der Endstellung relativ zu den ersten Statoreinheiten 104 einnehmen. Ferner sind die dritten Statoreinheiten 114 derart angeordnet, dass sie mit den zweiten Statoreinheiten 106 dann, wenn sich diese in der Endstellung befinden, im Wesentlichen eine gemeinsame Ebene E' bilden. Die Beladeposition P befindet sich in dieser Weiterbildung im Bereich der dritten Statoreinheiten 114.

Die zweiten Statoreinheiten 106 sind in Figur 3 in einer Zwischenstellung zwischen der Endstellung und der Anfangsstellung dargestellt. Der sich auf den zweiten Statoreinheiten 106 befindende Mover 108 ist gerade von der Zuführeinrichtung 112 beladen worden und anschließend von den dritten Statoreinheiten 114 auf die zweiten Statoreinheiten 106 gewechselt, als sich diese in ihrer Endstellung befanden. Gleichzeitig ist in dieser Endstellung ein unbeladener Mover 108 von den zweiten Statoreinheiten 106 auf die dritten Statoreinheiten 114 gewechselt und hat sich dort in die Beladeposition P begeben. Während dieser Mover 108 beladen wird, geben die zweiten Statoreinheiten 106 in der Anfangsstellung den beladenen Mover 108 an die ersten Statoreinheiten 104 ab und übernehmen von diesen den nächsten unbeladenen Mover.

Gegebenenfalls kann auf den dritten Statoreinheiten 114 nach der Beladeposition P auch noch wenigstens eine (nicht dargestellte) Warteposition vorgesehen sein, in der beladene Mover 108 auf die Rückkehr der zweiten Statoreinheiten 106 in deren Endstellung warten können. In analoger Weise kann auf den dritten Statoreinheiten 114 auch mehr als eine Zwischenposition für unbeladene Mover 108 vor der Beladeposition P vorgesehen sein. Es versteht sich von selbst, dass in diesem Fall die zweiten Statoreinheiten 106 eine entsprechende Anzahl von Positionen für Mover 108 aufweisen müssen.

Nachzutragen ist an dieser Stelle, dass an den zweiten Statoreinheiten 106 der Figuren 1 und 2, sowie den dritten Statoreinheiten 114 der Figur 3 Anschlageinheiten angebracht sein können, mittels derer, beispielsweise im Falle eines Stromausfalls, ein Herabrutschen des Movers 108 von der jeweiligen geneigten Bewegungsfläche 106a bzw. 114a vermieden werden kann. Eine derartige Anschlageinheit 116 ist beispielhaft in Figur 2 grob schematisch angedeutet.

Ferner ist darauf hinzuweisen, dass die erste Weiterbildung gemäß Figur 2 und die zweite Weiterbildung gemäß Figur 3 in einfacher Weise durch Hinzufügen weiterer Statoreinheiten 106 und/oder 108 in der jeweils beschriebenen Anordnung und Anpassung der Software für die Steuerung der Bewegung der Mover 108 ausgehend von der Ausführungsform der Figur 1 erhalten werden können.

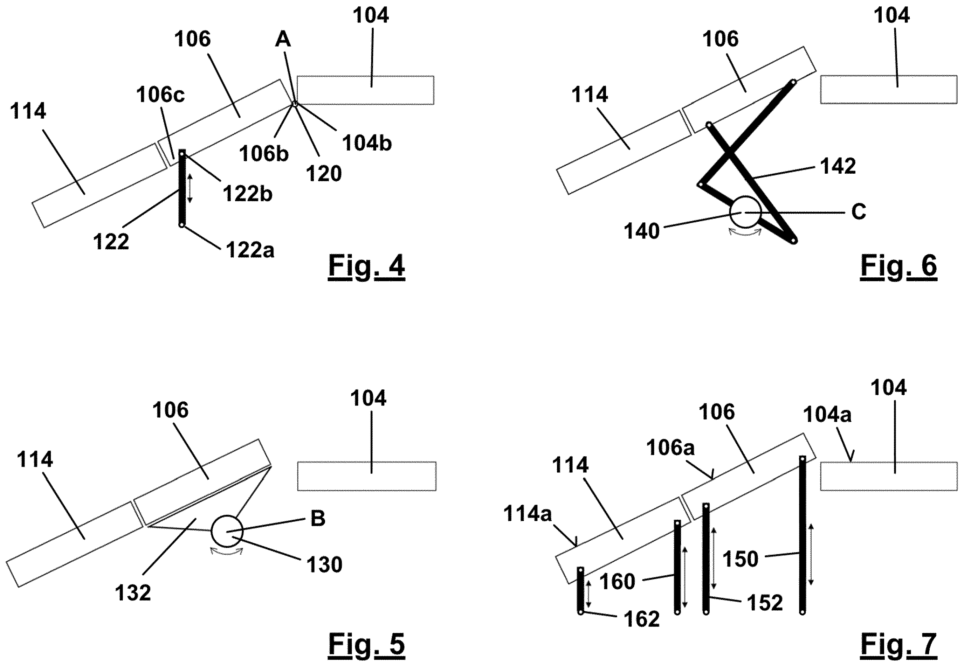

Die Verstellung der zweiten Statoreinheiten 106 zwischen der Anfangsstellung und der geneigten Endstellung kann in unterschiedlicher Art und Weise bewerkstelligt werden. Mit Bezug auf die Figuren 4 bis 7 sollen vier Möglichkeiten beschrieben werden, ohne dass dies als abschließende Aufzählung aller denkbaren Möglichkeiten verstanden werden sollte.

Die in Figur 4 dargestellte Verstellmöglichkeit entspricht im Wesentlichen jener, die auch in den Figuren 1 bis 3 zum Einsatz kommt, wenn sie dort auch nicht so detailliert dargestellt ist. Und zwar sind gemäß dieser Verstellmöglichkeit die ersten Statoreinheiten 104 und die zweite Statoreinheit 106 bzw. die zweiten Statoreinheiten 106 längs zweier benachbarter Kanten 104b und 106b mittels eines Scharniers 120 aneinander angelenkt. Die Schwenkachse ist in Figur 4 mit A bezeichnet. Ferner ist wenigstens eine Linearstelleinheit 122 vorgesehen, die mit der zweiten Statoreinheit 106 bzw. den zweiten Statoreinheiten 106 der gegenüberliegenden Kante 106c benachbart in Stelleingriff steht. Die Anlenkstellen der Stelleinheit 122 an einem Rahmen der Beladevorrichtung 102 und an der zweiten Stelleinheit 106 bzw. den zweiten Stelleinheiten 106 sind in Figur 4 mit 122a bzw. 122b bezeichnet.

Im Unterschied dazu kommt bei der in Figur 5 dargestellten Verstellmöglichkeit eine Rotationsstelleinheit 130 zum Einsatz, die über eine Halterung 132 mit der zweiten Statoreinheit 106 bzw. den zweiten Statoreinheiten 106 verbunden ist. Die Schwenkachse der Rotationsstelleinheit 130 ist in Figur 5 mit B bezeichnet.

Auch bei der Verstellmöglichkeit der Figur 6 kommt eine Rotationsstelleinheit 140 zum Einsatz. Diese ist im Unterschied zur Figur 5 jedoch über einen Gelenkmechanismus 142 mit der zweiten Statoreinheit 106 bzw. den zweiten Statoreinheiten 106 verbunden, was etwas weniger Bauraum in Anspruch nimmt. Die Schwenkachse der Rotationsstelleinheit 140 ist in Figur 6 mit C bezeichnet.

Bei der in Figur 7 dargestellten Verstellmöglichkeit sind schließlich zwei Linearstellantriebe 150, 152 vorgesehen, die einenends am Rahmen der Beladevorrichtung 102 und andernends an der zweiten Statoreinheit 106 bzw. an den zweiten Statoreinheiten 106 angelenkt sind.

In Figur 7 sind ferner zwei entsprechende Linearstellantriebe 160, 162 für die dritte Statoreinheit 114 bzw. die dritten Statoreinheiten 114 dargestellt, die es ermöglichen, die dritte Statoreinheit 114 bzw. die dritten Statoreinheiten 114 derart zu verstellen, dass ihre Bewegungsfläche 114a zum einen mit der Bewegungsfläche 106a der zweiten Statoreinheit 106 bzw. der zweiten Statoreinheiten 106 und zum anderen mit der Bewegungsfläche 104a der ersten Statoreinheiten 104 eine gemeinsame Ebene E bildet (siehe Figur 3). Diese Linearstellantriebe 160, 162 können natürlich in gleicher Weise auch bei den Verstellmöglichkeiten der Figuren 4 bis 6 zum Einsatz kommen.

## Patentansprüche

1. Beladevorrichtung (102) zum Beladen einer auf einem Mover (108) angebrachten Aufnahme (108a) mit wenigstens einem nicht zur Beladevorrichtung gehörenden Produkt (110), wobei der Mover (108) Teil einer in Magnetschwebetechnologie ausgebildeten Fördervorrichtung ist, die Beladevorrichtung umfassend:
• den Mover (108) mit der darauf angebrachten Aufnahme (108a),
• wenigstens eine Zuführeinrichtung (112) zum Zuführen des wenigstens einen Produkts (110),
• wenigstens eine erste Statoreinheit (104) mit einer ersten Bewegungsfläche (104a), längs der sich der Mover (108) bewegen kann, und
• wenigstens eine zweite Statoreinheit (106) mit einer zweiten Bewegungsfläche (106a), längs der sich der Mover (108) bewegen kann,
wobei die wenigstens eine erste Statoreinheit (104) und die wenigstens eine zweite Statoreinheit (106) in einer Anfangsstellung relativ zueinander so angeordnet sind, dass die erste Bewegungsfläche (104a) und die zweite Bewegungsfläche (106a) im Wesentlichen eine gemeinsame Ebene bilden,
**dadurch gekennzeichnet, dass** die wenigstens eine zweite Statoreinheit (106) relativ zu der wenigstens einen ersten Statoreinheit (104) zwischen der Anfangsstellung und einer Endstellung neigbar ist,
wobei die wenigstens eine Zuführeinrichtung (112) derart angeordnet ist, dass das wenigstens eine Produkt (110) schwerkraftbedingt von der jeweiligen Zuführeinrichtung (112) in die Aufnahme (108a) des Movers (108) überführbar ist, wenn sich dieser in einer geneigten, der jeweiligen Zuführeinrichtung zugeordneten Beladeposition (P) befindet, deren Neigungswinkel im Wesentlichen gleich dem Neigungswinkel (α) der in der Endstellung angeordneten wenigstens einen zweiten Statoreinheit (106) ist.

2. Beladevorrichtung nach Anspruch 1,
**dadurch gekennzeichnet, dass** ein an die zugeordnete Beladeposition des Movers (108) angrenzender Abschnitt (112a) der wenigstens einen Zuführeinrichtung (112) relativ zu der ersten Bewegungsfläche (104a) der wenigstens einen ersten Statoreinheit (104) geneigt verläuft.

3. Beladevorrichtung nach Anspruch 2,
**dadurch gekennzeichnet, dass** der Winkel (α) zwischen der wenigstens einen, geneigt verlaufenden Zuführeinrichtung (112) und der zweiten Bewegungsfläche (106a) der sich in der Endstellung befindlichen wenigstens einen zweiten Statoreinheit (106) zwischen etwa 160° und etwa 30°, vorzugsweise zwischen etwa 120° und etwa 45°, noch bevorzugter etwa 90°, beträgt.

4. Beladevorrichtung nach einem der Ansprüche 1 bis 3,
**dadurch gekennzeichnet, dass** die wenigstens eine zweite Statoreinheit (106) ausreichend Platz für die gleichzeitige Anordnung von wenigstens zwei Movern (108) aufweist.

5. Beladevorrichtung nach einem der vorangehenden Ansprüche 1 bis 4, **dadurch gekennzeichnet, dass** sie ferner wenigstens eine dritte Statoreinheit (114) mit einer dritten Bewegungsfläche (114a), längs der sich der Mover (108) bewegen kann, umfasst,
wobei die wenigstens eine dritte Statoreinheit (114) im Wesentlichen die gleiche Neigung aufweist wie die wenigstens eine zweite Statoreinheit (106) in der Endstellung, und
wobei die zweite Bewegungsfläche (106a) und die dritte Bewegungsfläche (114a), dann, wenn sich die wenigstens eine zweite Statoreinheit (106) in der Endstellung befindet, im Wesentlichen eine gemeinsame Ebene (E') bilden.

6. Beladevorrichtung nach Anspruch 5,
**dadurch gekennzeichnet, dass** die wenigstens eine dritte Statoreinheit (114) ausreichend Platz für die gleichzeitige Anordnung von wenigstens zwei Movern (108) aufweist.

7. Beladevorrichtung nach einem der Ansprüche 1 bis 6,
**dadurch gekennzeichnet, dass** der wenigstens einen Beladeposition (P) und gegebenenfalls der wenigstens einen weiteren Position eine Anschlageinheit (116) zugeordnet ist.

8. Beladevorrichtung nach einem der Ansprüche 5 bis 7,
**dadurch gekennzeichnet, dass** die wenigstens eine dritte Statoreinheit (114) in eine Stellung überführbar ist, in der die dritte Bewegungsfläche (114a) zusammen mit der zweiten Bewegungsfläche (106a) der wenigstens einen zweiten Statoreinheit (106) und der ersten Bewegungsfläche (104a) der wenigstens einen ersten Statoreinheit (104) im Wesentlichen eine gemeinsame Ebene (E) bildet.

9. Beladevorrichtung nach einem der Ansprüche 1 bis 8,
**dadurch gekennzeichnet, dass** die wenigstens eine zweite Statoreinheit (106) an der wenigstens einen ersten Statoreinheit (104) um eine Schwenkachse (A) schwenkbar angelenkt ist.

10. Beladevorrichtung nach Anspruch 9,
**dadurch gekennzeichnet, dass** ein Stellantrieb (122) an einer von der Schwenkachse (A) entfernten Stelle der wenigstens einen zweiten Statoreinheit (106) angreift.

11. Beladevorrichtung nach einem der Ansprüche 1 bis 8,
**dadurch gekennzeichnet, dass** die wenigstens eine zweite Statoreinheit (106) mit einem Schwenkmechanismus (130/132; 140/142) verbunden ist, dessen Schwenkachse (B; C) außerhalb der wenigstens einen zweiten Statoreinheit (106) angeordnet ist.

12. Beladevorrichtung nach Anspruch 11,
**dadurch gekennzeichnet, dass** ein Stellantrieb (130; 140) zum Verschwenken des Schwenkmechanismus (130/132; 140/142) vorgesehen ist.

13. Beladevorrichtung nach einem der Ansprüche 1 bis 8,
**dadurch gekennzeichnet, dass** wenigstens zwei Stellantriebe (150, 152) vorgesehen sind, die an voneinander beabstandeten Stellen der wenigstens einen zweiten Statoreinheit (106) angreifen.

14. Beladevorrichtung nach einem der Ansprüche 8 bis 13,
**dadurch gekennzeichnet, dass** wenigstens zwei Stellantriebe (160, 162) vorgesehen sind, die an voneinander beabstandeten Stellen der wenigstens einen dritten Statoreinheit (114) angreifen.

15. Magnetschwebefördervorrichtung (100) umfassend wenigstens eine Beladevorrichtung (102) nach einem der vorhergehenden Ansprüche.

## Claims

1. Loading device (102) for loading a receptacle (108a) mounted on a mover (108) with at least one product (110) not belonging to the loading device, wherein the mover (108) is part of a conveying device designed using magnetic levitation technology, the loading device comprising:
• the mover (108) with the receptacle (108a) mounted thereon,
• at least one feed device (112) for feeding the at least one product (110),
• at least a first stator unit (104) with a first movement area (104a) along which the mover (108) can move, and
• at least a second stator unit (106) with a second movement area (106a) along which the mover (108) can move,
wherein the at least one first stator unit (104) and the at least one second stator unit (106) are arranged in an initial position relative to each other such that the first movement area (104a) and the second movement area (106a) essentially form a common plane,
**characterized in that** the at least one second stator unit (106) can be tilted relative to the at least one first stator unit (104) between the initial position and a final position,
wherein the at least one feed device (112) is arranged such that the at least one product (110) can be transferred by gravity from the respective feed device (112) into the receptacle (108a) of the mover (108) when the latter is in an inclined loading position (P) assigned to the respective feed device, the angle of inclination of which is essentially equal to the angle of inclination (a) of the at least one second stator unit (106) arranged in the final position.

2. Loading device according to claim 1,
**characterized in that** a section (112a) of the at least one feed device (112) adjacent to the assigned loading position of the mover (108) is inclined relative to the first movement area (104a) of the at least one first stator unit (104).

3. Loading device according to claim 2,
**characterized in that** the angle (a) between the at least one inclined feed device (112) and the second movement area (106a) of the at least one second stator unit (106) in the final position is between approximately 160° and approximately 30°, preferably between approximately 120° and approximately 45°, more preferably approximately 90°.

4. Loading device according to any one of claims 1 to 3,
**characterized in that** the at least one second stator unit (106) has sufficient space for the simultaneous assembly of at least two movers (108).

5. Loading device according to any one of the preceding claims 1 to 4, **characterized in that** it further comprises at least a third stator unit (114) with a third movement area (114a) along which the mover (108) can move,
wherein the at least one third stator unit (114) has substantially the same inclination as the at least one second stator unit (106) in the final position, and
wherein, when at least one second stator unit (106) is in the final position, the second movement area (106a) and the third movement area (114a) essentially form a common plane (E').

6. Loading device according to claim 5,
**characterized in that** the at least one third stator unit (114) has sufficient space for the simultaneous assembly of at least two movers (108).

7. Loading device according to any one of claims 1 to 6,
**characterized in that** a stop unit (116) is assigned to at least one loading position (P) and, where applicable, to the at least one further position.

8. Loading device according to any one of claims 5 to 7,
**characterized in that** the at least one third stator unit (114) can be moved into a position in which the third movement area (114a) together with the second movement area (106a) of the at least one second stator unit (106) and the first movement area (104a) of the at least one first stator unit (104) essentially form a common plane (E).

9. Loading device according to any one of claims 1 to 8,
**characterized in that** the at least one second stator unit (106) is pivotably connected to the at least one first stator unit (104) about a pivot axis (A).

10. Loading device according to claim 9,
**characterized in that** an actuator (122) acts on a point of the least one second stator unit (106) remote from the pivot axis (A).

11. Loading device according to any one of claims 1 to 8,
**characterized in that** the at least one second stator unit (106) is connected to a pivot mechanism (130/132, 140/142), the pivot axis (B, C) of which is arranged outside the at least one second stator unit (106).

12. Loading device according to claim 11,
**characterized in that** an actuator (130, 140) is provided for pivoting the pivot mechanism (130/132, 140/142).

13. Loading device according to any one of claims 1 to 8,
**characterized in that** at least two actuators (150, 152) are provided, which act on spaced apart points of the at least one second stator unit (106).

14. Loading device according to any one of claims 8 to 13,
**characterized in that** at least two actuators (160, 162) are provided, which act on spaced apart points of the at least one third stator unit (114).

15. Magnetic levitation conveying device (100) comprising at least one loading device (102) according to any one of the preceding claims.

## Revendications

1. Dispositif de chargement (102) destiné à charger un réceptacle (108a), monté sur un dispositif de déplacement (108), avec au moins un produit (110) n'appartenant pas au dispositif de chargement, le dispositif de déplacement (108) faisant partie d'un dispositif de transport conçu selon la technologie de lévitation magnétique, le dispositif de chargement comprenant :
• le dispositif de déplacement (108) avec le réceptacle (108a) monté sur celui-ci,
• au moins un dispositif d'amenée (112) pour amener ledit au moins un produit (110),
• au moins une première unité de stator (104) présentant une première surface de déplacement (104a) le long de laquelle le dispositif de déplacement (108) peut se déplacer, et
• au moins une deuxième unité de stator (106) présentant une deuxième surface de déplacement (106a) le long de laquelle le dispositif de déplacement (108) peut se déplacer,
sachant que dans une position initiale, ladite au moins une première unité de stator (104) et ladite au moins une deuxième unité de stator (106) sont disposées l'une par rapport à l'autre de telle sorte que la première surface de déplacement (104a) et la deuxième surface de déplacement (106a) forment sensiblement un plan commun,
**caractérisé en ce que** ladite au moins une deuxième unité de stator (106) peut être inclinée par rapport à ladite au moins une première unité de stator (104) entre la position initiale et une position finale,
ledit au moins un dispositif d'amenée (112) est agencé de telle sorte que ledit au moins un produit (110) peut être transféré par gravité du dispositif d'amenée respectif (112) vers le réceptacle (108a) du dispositif de déplacement (108) lorsque celui-ci se trouve dans une position de chargement (P) inclinée associée au dispositif d'amenée respectif, dont l'angle d'inclinaison est sensiblement égal à l'angle d'inclinaison (α) de ladite au moins une deuxième unité de stator (106) disposée dans la position finale.

2. Dispositif de chargement selon la revendication 1,
**caractérisé en ce qu'**une portion (112a) dudit au moins un dispositif d'amenée (112), adjacente à la position de chargement associée du dispositif de déplacement (108), s'étend de manière inclinée par rapport à la première surface de déplacement (104a) de ladite au moins une première unité de stator (104).

3. Dispositif de chargement selon la revendication 2,
**caractérisé en ce que** l'angle (α) entre ledit au moins un dispositif d'amenée incliné (112) et la deuxième surface de déplacement (106a) de ladite au moins une deuxième unité de stator (106) située dans la position finale est compris entre environ 160° et environ 30°, de préférence entre environ 120° et environ 45°, et est de préférence d'environ 90°.

4. Dispositif de chargement selon l'une des revendications 1 à 3,
**caractérisé en ce que** ladite au moins une deuxième unité de stator (106) présente suffisamment d'espace pour la disposition simultanée d'au moins deux dispositifs de déplacement (108).

5. Dispositif de chargement selon l'une des revendications précédentes 1 à 4,
**caractérisé en ce qu'**il comprend en outre au moins une troisième unité de stator (114) présentant une troisième surface de déplacement (114a) le long de laquelle le dispositif de déplacement (108) peut se déplacer,
ladite au moins une troisième unité de stator (114) présente sensiblement la même inclinaison que celle de ladite au moins une deuxième unité de stator (106) dans la position finale, et
lorsque ladite au moins une deuxième unité de stator (106) est située dans la position finale, la deuxième surface de déplacement (106a) et la troisième surface de déplacement (114a) forment sensiblement un plan commun (E').

6. Dispositif de chargement selon la revendication 5,
**caractérisé en ce que** ladite au moins une troisième unité de stator (114) présente suffisamment d'espace pour la disposition simultanée d'au moins deux dispositifs de déplacement (108).

7. Dispositif de chargement selon l'une des revendications 1 à 6, **caractérisé en ce qu'**une unité de butée (116) est associée à ladite au moins une position de chargement (P) et, le cas échéant, à ladite au moins une autre position.

8. Dispositif de chargement selon l'une des revendications 5 à 7, **caractérisé en ce que** ladite au moins une troisième unité de stator (114) peut être transférée vers une position dans laquelle la troisième surface de déplacement (114a), conjointement avec la deuxième surface de déplacement (106a) de ladite au moins une deuxième unité de stator (106) et avec la première surface de déplacement (104a) de ladite au moins une première unité de stator (104), forme sensiblement un plan commun (E).

9. Dispositif de chargement selon l'une des revendications 1 à 8, **caractérisé en ce que** ladite au moins une deuxième unité de stator (106) est articulée sur ladite au moins une première unité de stator (104) de manière à pouvoir pivoter autour d'un axe de pivotement (A).

10. Dispositif de chargement selon la revendication 9,
**caractérisé en ce qu'**un actionneur (122) agit sur un emplacement de ladite au moins une deuxième unité de stator (106), qui est distant de l'axe de pivotement (A).

11. Dispositif de chargement selon l'une des revendications 1 à 8, **caractérisé en ce que** ladite au moins une deuxième unité de stator (106) est reliée à un mécanisme de pivotement (130/132 ; 140/142) dont l'axe de pivotement (B ; C) est disposé à l'extérieur de ladite au moins une deuxième unité de stator (106).

12. Dispositif de chargement selon la revendication 11,
**caractérisé en ce qu'**un actionneur (130 ; 140) est prévu pour faire pivoter le mécanisme de pivotement (130/132 ; 140/142).

13. Dispositif de chargement selon l'une des revendications 1 à 8, **caractérisé en ce qu'**il est prévu au moins deux actionneurs (150, 152) qui agissent sur des emplacements de ladite au moins une deuxième unité de stator (106), qui sont espacés l'un de l'autre.

14. Dispositif de chargement selon l'une des revendications 8 à 13, **caractérisé en ce qu'**il est prévu au moins deux actionneurs (160, 162) qui agissent sur des emplacements de ladite au moins une troisième unité de stator (114), qui sont espacés l'un de l'autre.

15. Dispositif de transport à lévitation magnétique (100) comprenant au moins un dispositif de chargement (102) selon l'une des revendications précédentes.
